# EUROPÄISCHE PATENTSCHRIFT

(11) **EP 1 370 028 B1**
(45) Veröffentlichungstag und Bekanntmachung des Hinweises auf die Patenterteilung: **22.08.2007**
(21) Anmeldenummer: 02012632.2
(22) Anmeldetag: 06.06.2002
(51) Int. Cl.: H04L 12/26, H04L 1/24

(54) **Verfahren zur dynamischen Steuerung der Kanalauslastung eines Übertragungskanals und Lastgenerator zum Senden einer Testsequenz**
Method for dynamical control of loading of a transmission channel and load generator for transmitting a test sequence
Procédé de contrôle dynamique de la charge canal de transmission et générateur de charge pour la transmission d'une séquence de test

(43) Veröffentlichungstag der Anmeldung: 10.12.2003
(73) Patentinhaber: Tektronix International Sales GmbH, 8201 Schaffhausen (CH)
(72) Erfinder: Wiethoff, Carsten, 14165 Berlin (DE); Thiele, Ingo, 12045 Berlin (DE)
(74) Vertreter: Schurack, Eduard F.

(56) Entgegenhaltungen:
- DE-C- 19 518 135
- US-A- 4 967 412
- US-A- 5 812 558
- US-A- 6 157 615
- US-A1- 2002 037 008

## Beschreibung

Die vorliegende Erfindung betrifft ein Verfahren zur dynamischen Steuerung der Kanalauslastung eines Übertragungskanals beim Senden einer Testsequenz. Sie betrifft weiterhin einen Lastgenerator zum Senden einer Testsequenz über einen Übertragungskanal.

Es ist bekannt, zum Überprüfen von Kommunikationshardware Testsignale zu erzeugen und die Kommunikationshardware damit zu betreiben. Im Stand der Technik wurden hierzu statische Testpattern für jede Kommunikationshardware separat entwickelt. Vor allem praxisrelevante Tests, für die das Verhalten bei unterschiedlichen Kanalauslastungen untersucht werden sollte, waren damit nur sehr umständlich zu realisieren. Im Stand der Technik mussten zur Realisierung unterschiedlicher Kanalauslastungen unterschiedliche Testpattern entwickelt werden. Kritische Kanalauslastungen wurden so häufig übersehen, da nur für einige wenige diskrete Kanalauslastungen Testdaten entwickelt wurden, für die dazwischenliegenden Kanalauslastungen nicht.

Aus der US 6,157,615 ist ein Verfahren zum Kontrollieren eines Tests für einen Datenaustausch in einem ATM-System bekannt. Bei dem dortigen Verfahren werden eine Mehrzahl an Einheiten zum Erzeugen von Prüfzellen verwendet, wobei die Anzahl dieser Einheiten, welche während einer periodischen Testzeit verwendet werden, eine Funktion eines speziellen Lastniveaus, eines gemessenen Lastniveaus und eines Überlastniveaus ist. Sobald das gemessene Lastniveau das spezielle bzw. vorgegebene Lastniveau erreicht, wird die Anzahl an Einheiten zum Erzeugen von Prüfzellen von einem maximalen Wert auf einen minimalen Wert reduziert. Der Test wird dann beendet, wenn das gemessene Lastniveau das Überlastniveau erreicht.

Die Aufgabe der vorliegenden Erfindung besteht deshalb darin, die Möglichkeiten des Testens von Kommunikationshardware zu verbessern und eine hochgenaue Messung erhalten zu können.

Diese Aufgabe wird gelöst durch ein Verfahren mit den Merkmalen von Patentanspruch 1 sowie einen Lastgenerator mit den Merkmalen von Patentanspruch 15.

Die vorliegende Erfindung basiert auf der Erkenntnis, dass eine Verbesserung des Testens von Kommunikationshardware dadurch ermöglicht wird, dass eine Soll-Kanalauslastung durch eine Bedienperson vorgebbar ist, eine Ist-Kanalauslastung während des Tests ermittelt wird und entsprechend der Differenz entweder eine geeignete Anzahl von Füllzeichen übertragen wird oder ein entsprechender Wartezyklus eingehalten wird, bevor die nächsten Pattern der Testsequenz übertragen werden. Dadurch ergibt sich die Möglichkeit einer dynamischen Variation der Kanalauslastung, ohne dass für jede Soll-Kanalauslastung eigene Testdaten erzeugt werden müssten. Damit lassen sich große Bereiche von Kanalauslastungen auf äußerst einfache Weise testen, wodurch auch kritische Kanalauslastungen aufgefunden und entsprechende Gegenmaßnahmen eingeleitet werden können. Die vorliegende Erfindung trägt deshalb entscheidend dazu bei, zuverlässige Kommunikationshardware zu entwickeln.

Für hochgenaue Messungen bei sehr hohen Übertragungsraten werden in Schritt e) die Ausführzeiten von Maschinenbefehlen, beispielsweise Speicherzugriff und Rechenzeit, mitberücksichtigt.

Bevorzugt werden die Schritte a) und b) nicht in Echtzeit durchgeführt, sondern zeitunkritisch vor dem Beginn der Übertragung der Testdaten. Die Schritte c) bis g) werden dagegen zur Realisierung aussagekräftiger Tests in Echtzeit durchgeführt.

Es kann vorgesehen sein, dass die Soll-Kanalauslastung in Schritt b) kontinuierlich veränderbar ist. Dies kann realisiert werden durch das Vorsehen entsprechender Einstellmittel, die von einer Bedienperson bedient werden können. Es kann jedoch auch vorgesehen werden, dass beispielsweise über entsprechende Softwareführung Kriterien für die Variation der Soll-Kanalauslastung bestimmt werden können, beispielsweise untere zu testende Soll-Kanalauslastung und obere zu testende Soll-Kanalauslastung, der Abstand einer zu testenden Soll-Kanalauslastung zur nächsten sowie die Zeit, über die die entsprechenden Soll-Kanalauslastungen eingestellt und getestet werden sollen.

Die in Schritt c) vorgebbare Anzahl von zu sendenden Testpattern kann beispielsweise eins sein, wodurch sich sehr präzise die eingestellten Soll-Kanalauslastungen testen lassen. Es kann jedoch auch vorgesehen sein, dass die vorgebbare Anzahl von zu testenden Testpattern in Schritt c) größer als eins ist. Dies stellt die Möglichkeit bereit, Kommunikationshardware im Burst-Modus zu testen.

Die Erzeugung der Testsequenz in Schritt a) kann folgende Teilschritte umfassen: Zunächst das Festlegen von Definitionen für Testpattern des bei der Übertragung zu verwendenden Kommunikationsprotokolls, und anschließend die Zusammenstellung einer Testsequenz aus den im vorherigen Schritt festgelegten Definitionen für Testpattern.

Es kann vorgesehen sein, dass in dem zuletzt genannten Schritt Wiederholungsschleifen für ein oder mehrere Testpattern angebbar sind. Bevorzugt werden diese Teilschritte unter Verwendung eines Texteditors durchgeführt. Bevorzugt ist weiterhin, dass in Schritt c) die Testsequenz unter Verwendung eines Interpreters in eine Bytefolge dekodiert und auf der für die Übertragung vorgesehenen Hardware gesendet wird. Die Testpattern werden bevorzugt durchnummeriert, so dass sie anhand der ihnen zugewiesenen Nummer gewählt werden können. Dadurch lassen sich auf sehr einfache Art und Weise komplexe Testsequenzen erstellen. Bevorzugt ist eine Testsequenz, die mehrere Testpattern umfasst, aufgebaut aus Anweisungen, wie zum Beispiel "Wiederhole", "Ende Schleife", "Anfang Schleife", mit einer Länge von einem Zeichen, bevorzugt einem Buchstaben, wobei jeder Anweisung ein Parameter zugewiesen ist. Der Parameter kann bevorzugt eine einer Testpattern zugewiesene Nummer, eine Anzahl von Schleifendurchläufen oder die Bezeichnung einer anderen Testsequenz sein. Die Verwendung einer derartigen Beschreibungssprache kann auch unabhängig von dem erfindungsgemäßen Verfahren und dem erfindungsgemäßen Lastgenerator im Zusammenhang mit aus dem Stand der Technik bekannten Verfahren und Lastgeneratoren eingesetzt werden.

In Schritt d) wird die Länge der gesendeten Pattern vorzugsweise in einer Anzahl von Bytes ermittelt, wodurch berücksichtigt werden kann, dass unterschiedliche Pattern unterschiedliche Länge aufweisen.

Weitere vorteilhafte Ausführungsformen ergeben sich aus den Unteransprüchen.

Im Nachfolgenden werden Ausführungsbeispiele der Erfindung unter Hinweis auf die beigefügten Zeichnungen näher beschrieben. Es stellen dar:
- Figur 1: ein erstes Ausführungsbeispiel eines erfindungsgemäßen Lastgenerators;
- Figur 2: ein zweites Ausführungsbeispiel eines erfindungsgemäßen Lastgenerators;
- Figur 3: einen Signalflussplan zur Durchführung eines erfindungsgemäßen Verfahrens auf dem Lastgenerator gemäß Figur 1;
- Figur 4: einen Signalflussplan zur Durchführung eines erfindungsgemäßen Verfahrens auf dem Lastgenerator gemäß Figur 2;
- Figur 5: ein Beispiel für die Festlegung von Definitionen für Testpattern; und
- Figur 6: ein Beispiel für eine Testsequenz aus den gemäß Figur 5 für Testpattern festgelegten Definitionen.

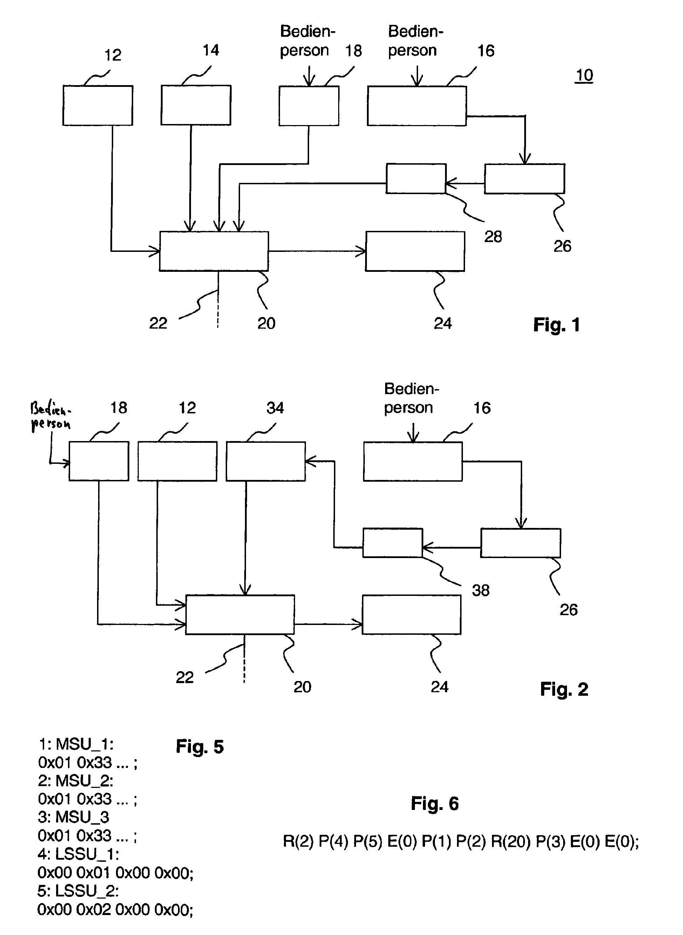

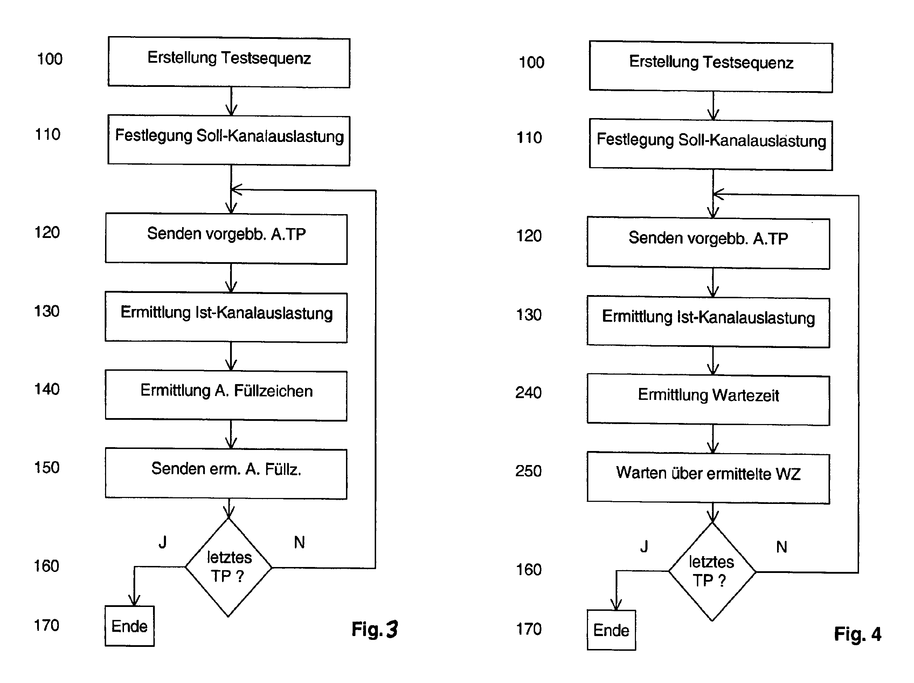

Zunächst wird ein erstes Ausführungsbeispiel der Erfindung unter Bezugnahme auf die Figuren 1 und 3 näher beschrieben. Figur 1 zeigt in prinzipieller Darstellung den Aufbau eines entsprechenden Lastgenerators, Figur 3 ein zugehöriges Ablaufdiagramm. Zunächst wird in Schritt 100 eine Testsequenz erstellt und in einem Speicher 12 abgelegt. Dies kann zeitunkritisch vorab erfolgen, insbesondere auch nicht in Echtzeit. Zur Erstellung einer Testsequenz wird hier detaillierter unter Bezug auf die Figuren 5 und 6 eingegangen werden.

Füllzeichen sind in einem Füllzeichenspeicher 14 abgelegt. An einer Einheit 16 kann eine Bedienperson im Schritt 110 die Soll-Kanalauslastung festlegen. Bevorzugt wird der Bediener hierbei menügesteuert aufgefordert, einer Eingabeeinheit die untere Soll-Kanalauslastung, die obere Soll-Kanalauslastung, Abstand von einer Soll-Kanalauslastung zur nächsten sowie die Zeitdauer während die entsprechende Soll-Kanalauslastung eingestellt werden soll, anzugeben. An einer Einheit 18 kann eine Bedienperson einstellen, nach wie vielen Pattern einer Testsequenz eine Auswertung der Ist-Kanalauslastung zu erfolgen hat. Nach Eingabe des entsprechenden Werts kann ein Sender 20 in Betrieb gesetzt werden, der im Schritt 120 die vorgegebene Anzahl von Testpattern auf einer Leitung 22 sendet. Im Schritt 130 wird anschließend die Ist-Kanalauslastung in einer entsprechenden Einheit 24 ermittelt und in einer Vergleichseinheit 26 ein Vergleich mit der maßgeblichen Soll-Kanalauslastung, die von der Einheit 16 bereitgestellt wird, durchgeführt. Die Vergleichseinheit 26 übermittelt ihr Ergebnis an eine Einheit 28, die ermittelt, wie viele Füllzeichen nach den gesendeten Testpattern einzufügen sind, um die Soll-Kanalauslastung einzustellen, siehe hierzu auch Schritt 140. Der Sender 20 erhält von der Einheit 28 ein entsprechendes Signal und sendet im Schritt 150 eine entsprechende Anzahl von Füllzeichen aus dem Füllzeichenspeicher 14. Anschließend wird im Schritt 160 geprüft, ob bereits das letzte Testpattern gesendet wurde oder nicht. Im Fall, dass noch Testpattern zur Übertragung anstehen, springt der Ablauf zurück zu Schritt 120, bei dem wiederum eine vorgebbare Anzahl von Testpattern gesendet werden. Sollte bereits das letzte Testpattern gesendet worden sein, endet die Übertragung im Schritt 170.

Ein zweites Ausführungsbeispiel der Erfindung wird unter Bezugnahme auf die Figuren 2 und 4 detailliert beschrieben. Einheiten beziehungsweise Schritte, die denen von Figur 1 beziehungsweise Figur 3 entsprechen, tragen dieselben Bezugszeichen. Zur Vereinfachung wird deshalb nur auf die Unterschiede eingegangen. Gemäß Figur 2 stellt die Vergleichseinheit 26 ihr Ergebnis einer Einheit 38 zur Verfügung, die die Wartezeit bis zum Senden des nächsten Testpattern ermittelt, um die Soll-Kanalauslastung einzustellen, siehe hierzu auch Schritt 240. Die Einheit 38 steuert einen Timer 34 entsprechend an, der seinerseits den Sender 20 veranlasst, über die ermittelte Wartezeit zu warten, siehe hierzu auch Schritt 250, bevor die nächsten Testpattern gesendet werden.

Einige Hardwaretypen, wie zum Beispiel ATM-Hardware, fügen eigenständig in den durch diese Wartezeiten erzeugten Sendepausen Leerpakete in den Datenstrom ein, im Falle von ATM sind das dann Leerzellen. Dies ist jedoch eine Anforderung, die von der Hardware selbst nicht durch die vorliegende Erfindung realisiert wird.

Die vorliegende Erfindung schlägt zum Erstellen von komplexen Testdatensequenzen eine Beschreibungssprache vor, mit der die erstellten Daten auf die übliche Hardware gesendet werden können. Sie soll dargestellt werden am Beispiel eines Lastgenerators für eine SS7-Signalisierungsstrecke. Bei dem beispielhaft zu erstellenden Testszenario soll zunächst der Verbindungsaufbau mit einigen LSSU-Nachrichten simuliert werden.

Erfindungsgemäß können die Testpattern und Testsequenzen mit einem Texteditor erstellt werden und in einfachen ASCII-Dateien gespeichert werden. Ein Interpreter ist in der Lage, sofern ihm das verwendete Kommunikationsprotokoll bekannt ist, die Sequenzen zu dekodieren, um so die Bytefolge auf beliebigen Hardwareinterfaces zu senden.

Figur 5 zeigt die Definition von Testpattern, wobei der Zahl 1 die MSU_1 zugewiesen wird, die hexadezimal aufgebaut ist, wie in Zeile 2 von Figur 5 dargestellt. Ähnliches gilt für die MSU_2 und die MSU_3, die in den Zeilen 3 und 4 beziehungsweise 4 und 5 dargestellt sind. Die Zahl 4 definiert eine LSSU_1, während die Zahl 5 eine LSSU_2 definiert. Entsprechende hexadezimale Zuordnungen sind in den Zeilen 8 und 10 dargestellt.

Figur 6 zeigt eine zugehörige Testsequenz, die Folgendes besagt: R(2) bedeutet, dass die nachfolgende Testsequenz, das heißt das Testpattern 4 (P(4)) sowie das Pattern 5 (P(5)) zweimal gesendet werden. Der Buchstabe E gibt das Ende der mit dem Buchstaben R eröffneten Wiederholungsschleife an. Der Parameter hinter dem Buchstaben E ist ohne Einfluss. Anschließend wird das Pattern 1 (P(1)), dann Pattern 2 (P(2)) und anschließend zwanzigmal (R(20)) das Pattern 3 (P(3)) gesendet. Die beiden Anweisungen E(0) und E(0) am Ende der Sequenz beenden zunächst die durch R(20) eröffnete Wiederholungsschleife sowie die gesamte Sequenz.

Entsprechend Figur 1 wird die Variabilität dadurch realisiert, dass nach einer vorgebbaren Anzahl gesendeter Testpattern je nach eingestellter Soll-Kanalauslastung keine, eine oder mehrere FISUs gesendet werden. Für eine Ethernet-Anwendung wäre der in Figur 2 dargestellte Lastgenerator zu verwenden, bei dem nach der Sendung einer bestimmten Anzahl von beispielsweise ARP-Nachrichten die ermittelte Zeit gewartet wird, bevor weitere ARP-Nachrichten gesendet werden. Selbstverständlich läßt sich die Erfindung auch bei anderen Ehternet-Protokollen, beispielsweise IP, ICMP, RIP, anwenden.

Neben der Erstellung der zu sendenden Testsequenzen mittels der erwähnten Beschreibungssprache kommen hierfür auch andere Methoden in Betracht, beispielsweise die Auswertung eines Recordingfiles, die Eingabe über die Tastatur von Hand sowie andere Möglichkeiten der Kreierung durch Software.

Bei Anwendungen auf breitbandiger Hardware, wie zum Beispiel 100 MBit/s Ethernet, ist es besonders bevorzugt, die Ausführzeiten der Maschinenbefehle bei der Ermittlung der Anzahl der zu sendenden Füllzeichen sowie der Wartezeit mit zu berücksichtigen.

## Patentansprüche

1. Verfahren zur dynamischen Steuerung der Kanalauslastung eines Übertragungskanals beim Senden einer Testsequenz, folgende Schritte umfassend:
a) Erstellung der Testsequenz umfassend mehrere Testpattern gemäß einem bei der Übertragung zu verwendenden Kommunikationsprotokoll (Schritt 100);
b) Festlegen einer Soll-Kanalauslastung (Schritt 110);
c) Senden einer vorgebbaren Anzahl von Testpattern der Testsequenz (Schritt 120);
d) Ermittlung der Ist-Kanalauslastung (Schritt 130) und Vergleich der Ist-Kanalauslastung mit der Soll-Kanalauslastung;
e) Ermittlung der Anzahl zu sendender Füllzeichen unter Berücksichtigung der Ausführzeiten von Maschinenbefehlen oder einer Wartezeit unter Berücksichtigung der Ausführzeiten von Maschinenbefehlen, um die Soll-Kanalauslastung einzustellen (Schritt 140; Schritt 240);
f) Senden der ermittelten Anzahl von Füllzeichen (Schritt 150) oder Warten über die ermittelte Wartezeit (Schritt 250);
g) falls das letzte Testpattern der Testsequenz gesendet wurde (Schritt 160): Beendigung der Übertragung (Schritt 170); falls noch weitere Testpattern zur Übertragung anstehen: Rücksprung zu Schritt c).

2. Verfahren nach Anspruch 1,
**dadurch gekennzeichnet,**
**dass** Schritt a) und b) nicht in Echtzeit durchgeführt werden.

3. Verfahren nach einem der vorhergehenden Ansprüche,
**dadurch gekennzeichnet,**
**dass** die Schritte c) bis g) in Echtzeit durchgeführt werden.

4. Verfahren nach einem der vorhergehenden Ansprüche,
**dadurch gekennzeichnet,**
**dass** die Soll-Kanalauslastung in Schritt b) kontinuierlich veränderbar ist.

5. Verfahren nach einem der vorhergehenden Ansprüche,
**dadurch gekennzeichnet,**
**dass** die vorgebbare Anzahl von zu sendenden Testpattern in Schritt c) eins ist.

6. Verfahren nach einem der vorhergehenden Ansprüche,
**dadurch gekennzeichnet,**
**dass** die vorgebbare Anzahl von zu sendenden Testpattern in Schritt c) größer als eins ist.

7. Verfahren nach einem der vorhergehenden Ansprüche,
**dadurch gekennzeichnet,**
**dass** in Schritt a) die Erzeugung der Testsequenz folgende Teilschritte umfasst:
a1) Festlegung von Definitionen für Testpattern des bei der Übertragung zu verwendenden Kommunikationsprotokolls;
a2) Zusammenstellung einer Testsequenz aus den in Schritt a1) festgelegten Definitionen für die Testpattern.

8. Verfahren nach Anspruch 7,
**dadurch gekennzeichnet,**
**dass** in Schritt a2) Wiederholungsschleifen für ein oder mehrere Testpattern angebbar sind.

9. Verfahren nach Anspruch 7 oder 8,
**dadurch gekennzeichnet,**
**dass** die Schritte a1) und a2) unter Verwendung eines Texteditors durchgeführt werden.

10. Verfahren nach Anspruch 9,
**dadurch gekennzeichnet,**
**dass** in Schritt c) die Testsequenz unter Verwendung eines Interpreters in eine Bytefolge dekodiert und auf der für die Übertragung vorgesehenen Hardware gesendet wird.

11. Verfahren nach einem der Ansprüche 7 bis 10,
**dadurch gekennzeichnet,**
**dass** die Testpattern durchnummeriert werden und anhand der ihnen zugewiesenen Nummer gewählt werden können.

12. Verfahren nach einem der Ansprüche 7 bis 11,
**dadurch gekennzeichnet,**
**dass** eine Testsequenz aufgebaut ist aus Anweisungen, wie Wiederhole, Ende Schleife, Anfang Schleife, mit einer Länge von einem Zeichen, bevorzugt einem Buchstaben, wobei jeder Anweisung ein Parameter zugewiesen ist.

13. Verfahren nach Anspruch 12,
**dadurch gekennzeichnet,**
**dass** der Parameter eine einer Testpattern zugewiesene Nummer, eine Anzahl von Schleifendurchläufen oder die Bezeichnung einer anderen Testsequenz ist.

14. Verfahren nach einem der vorhergehenden Ansprüche,
**dadurch gekennzeichnet,**
**dass** in Schritt d) die Länge der gesendeten Pattern, vorzugsweise in einer Anzahl von Bytes, ermittelt wird.

15. Lastgenerator zum Senden einer Testsequenz über einen Übertragungskanal, umfassend:
a) eine Vorrichtung (12) zum Speichern der Testsequenz umfassend mehrere Testpattern gemäß einem bei der Übertragung zu verwendenden Kommunikationsprotokoll;
b) eine Vorrichtung (16) zum Festlegen einer Soll-Kanalauslastung;
c) einer Vorrichtung (20) zum Senden einer vorgebbaren Anzahl von Testpattern der Testsequenz;
d) eine Vorrichtung (24) zum Ermitteln der Ist-Kanalauslastung;
e) eine Vorrichtung (26, 28) zum Ermitteln der Anzahl zu sendender Füllzeichen unter Berücksichtigung der Ausführzeiten von Maschinenbefehlen oder eine Vorrichtung (26, 38) zum Ermitteln einer Wartezeit unter Berücksichtigung der Ausführzeiten von Maschinenbefehlen, um die Soll-Kanalauslastung einzustellen; und
f) eine Vorrichtung (20) zum Senden der ermittelten Anzahl von Füllzeichen oder eine Vorrichtung (34) zum Einhalten der ermittelten Wartezeit, bevor weitere Testpattern der Testsequenz gesendet werden.

## Claims

1. Method for the dynamic control of the channel utilisation of a transmission channel during the sending of a test sequence, comprising the following steps:
a) Setting up of the test sequence comprising several test patterns in accordance with a communication protocol to be used in the transmission (step 100);
b) Fixing of a target channel utilisation (step 110);
c) Sending of a pregivable number of test patterns of the test sequence (step 120);
d) Determining the actual channel utilisation (step 130) and comparison of the actual channel utilisation with the target channel utilisation;
e) Determining the number of filler characters to be sent taking the execution times of machine orders into account or a waiting time taking the execution times of machine orders into account, in order to set the target channel utilisation (step 140; step 240);
f) Sending the determined number of filler characters (step 150) or waiting for the established waiting time (step 250);
g) If the last test pattern of the test sequence was sent (step 160): terminating transmission (step 170);
In case further test patterns are ready for transmission: jump back to step c).

2. Method according to claim 1,
**characterised in that**
steps a) and b) are not performed in real time.

3. Method according to one of the preceding claims,
**characterised in that**
steps c) to g) are performed in real time.

4. Method according to one of the preceding claims,
**characterised in that**
the target channel utilisation in step b) is continuously changeable.

5. Method according to one of the preceding claims,
**characterised in that**
the pregivable number of test patterns to be sent in step c) is one.

6. Method according to one of the preceding claims,
**characterised in that**
the pregivable number of test patterns to be sent in step c) is larger than one.

7. Method according to one of the preceding claims,
**characterised in that**
in step a) the generation of the test sequence comprises the following partial steps:
a1) Fixing of definitions for test patterns of the communication protocol to be used in the transmission;
a2) Compiling of a test sequence from the definitions fixed in step a1) for the test patterns.

8. Method according to claim 7,
**characterised in that**
in step a2) repeat loops for one or several test patterns are definable.

9. Method according to claim 7 or 8,
**characterised in that**
steps a1) and a2) are performed using a text editor.

10. Method according to claim 9,
**characterised in that**
in step c) the test sequence is decoded into a byte sequence using an interpreter and is sent on the hardware envisaged in the transmission.

11. Method according to one of claims 7 to 10,
**characterised in that**
the test patterns are numbered consecutively and may be selected by way of the number assigned to them.

12. Method according to one of claims 7 to 11,
**characterised in that**
a test sequence is made up of instructions such as Repeat, End Loop, Start Loop, with a length of one character, preferably a letter, each instruction being assigned a parameter.

13. Method according to claim 12,
**characterised in that**
the parameter is a number assigned to a test pattern, a number of loop runs or the designation of another test sequence.

14. Method according to one of the preceding claims,
**characterised in that**
in step d) the length of the sent patterns is determined, preferably in a number of bytes.

15. Load generator for sending a test sequence via a transmission channel, comprising:
a) a device (12) for storing a test sequence comprising several test patterns according to a communication protocol to be used in the transmission;
b) a device (16) for fixing a target channel utilisation;
c) a device (20) for sending a pregivable number of test patterns of the test sequence;
d) a device (24) for determining the actual channel utilisation;
e) a device (26, 28) for determining the number of filler characters to be sent taking the execution times of machine orders into account or a device (26, 38) for determining a waiting time taking the execution times of machine orders into account, in order to adjust the target channel utilisation; and
f) a device (20) for sending the determined number of filler characters or a device (34) for observing the determined waiting time prior to further test patterns of the test sequence being sent.

## Revendications

1. Procédé de commande dynamique de la charge de canal d'un canal de transmission lors de l'envoi d'une séquence de test, comprenant les étapes suivantes:
a) création d'une séquence de test regroupant plusieurs motifs de test selon un protocole de communication à employer lors de la transmission (étape 100) ;
b) détermination d'une charge de canal de consigne (étape 110) ;
c) envoi d'un nombre prescriptible de motifs de trame de la séquence de test (étape 120);
d) détermination de la charge réelle de canal (étape 130) et comparaison de la charge de canal réelle et de la charge de canal de consigne;
e) détermination du nombre de caractères de remplissage à envoyer en tenant compte des temps d'exécution de commandes machine ou d'un temps d'attente en tenant compte des temps d'exécution de commandes machine de façon à régler la charge de consigne de canal (étape 140 ; étape 240);
f) envoi du nombre prédéterminé de caractères de remplissage (étape 150) ou attente pendant le temps d'attente déterminé (étape 250);
g) si le dernier motif de test de la séquence de test a été envoyé (étape 160) : fin de la transmission (étape 170).
si d'autres motifs de test figurent pour envoi: retour à l'étape c).

2. Procédé selon la revendication 1,
**caractérisé en ce que**
les étapes a) et b) ne sont pas réalisées en temps réel.

3. Procédé selon l'une quelconque des revendications précédentes ,
**caractérisé en ce que**
les étapes c) à g) sont réalisées en temps réel.

4. Procédé selon l'une quelconque des revendications précédentes,
**caractérisé en ce que**
la charge de consigne de canal à l'étape b) est modifiable en continu.

5. Procédé selon l'une quelconque des revendications précédentes ,
**caractérisé en ce que**
le nombre prescriptible de motifs de test à envoyer à l'étape c) est un.

6. Procédé selon l'une quelconque des revendications précédentes ,
**caractérisé en ce que**
le nombre prescriptible de motifs de test à envoyer à l'étape c) est supérieur à un.

7. Procédé selon l'une quelconque des revendications précédentes,
**caractérisé en ce que**
à l'étape a), la génération de la séquence de test regroupe les étapes partielles suivantes :
a1) détermination de définitions pour motifs de test du protocole de communication à utiliser lors de la transmission ;
a2) assemblage d'une séquence de test à partir des définitions pour les motifs de test déterminées à l'étape a1).

8. Procédé selon la revendication 7,
**caractérisé en ce que**
à l'étape a2), il est possible d'indiquer des boucles de répétition pour un ou plusieurs motifs de test.

9. Procédé selon la revendication 7 ou 8,
**caractérisé en ce que**
les étapes a1) et a2) sont exécutées en employant un éditeur de texte.

10. Procédé selon la revendication 9,
**caractérisé en ce que**
à l'étape c), la séquence de test est décodée en une suite d'octets en employant un interpréteur et envoyée au matériel prévu pour la transmission.

11. Procédé selon l'une quelconque des revendications 7 à 10 ,
**caractérisé en ce que**
les motifs de test sont numérotés et qu'elles peuvent être sélectionnés au moyen du numéro qui leur est attribué.

12. Procédé selon l'une quelconque des revendications 7 à 11,
**caractérisé en ce que**
une séquence de test est construite à partir d'instructions telles Répéter, Sortir de la boucle, Débuter la boucle, d'une longueur d'un caractère, de préférence une lettre, un paramètre étant affecté à chaque instruction.

13. Procédé selon la revendication 12,
**caractérisé en ce que**
le paramètre est un numéro affecté à un motif de test, un nombre de parcours de boucle ou la désignation d'une autre séquence de test.

14. Procédé selon l'une quelconque des revendications précédentes ,
**caractérisé en ce que**
à l'étape d), la longueur du motif envoyé, de préférence un nombre d'octets, est déterminée.

15. Générateur de charge pour envoyer une séquence de test par un canal de transmission, qui comprend :
a) un dispositif (12) pour stocker une séquence de test comprenant plusieurs motifs de test selon un protocole de communication à utiliser lors de la transmission ;
b) un dispositif (16) pour définir un charge de consigne de canal;
c) un dispositif (20) pour envoyer un nombre prescriptible de motifs de test de la séquence de test;
d) un dispositif (24) pour déterminer une charge réelle de canal;
e) un dispositif (26, 28) pour déterminer le nombre de caractères de remplissage à envoyer en tenant compte des temps d'exécution de commandes machine ou un dispositif (26, 38) pour déterminer un temps d'attente en tenant compte des temps d'exécution de commandes machine, de façon à régler la charge de consigne de canal;
et
f) un dispositif (20) pour envoyer le nombre déterminé de caractères de remplissage ou un dispositif (34) pour respecter le temps d'attente déterminé avant que d'autres motifs de test de la séquence de test soient envoyés.
